(19) Europäisches Patentamt
European Patent Office
Office européen des brevets

(11) **EP 2 583 875 A2**

(12) **EUROPÄISCHE PATENTANMELDUNG**

(43) Veröffentlichungstag:
24.04.2013 Patentblatt 2013/17

(51) Int Cl.:
*B60W 30/12* (2006.01)    *B62D 15/02* (2006.01)

(21) Anmeldenummer: 12181865.2

(22) Anmeldetag: 27.08.2012

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **17.10.2011 DE 102011084611**

(71) Anmelder: **ROBERT BOSCH GMBH**
**70442 Stuttgart (DE)**

(72) Erfinder:
• **Rentschler, Tobias**
**75180 Pforzheim (DE)**
• **Hauler, Florian**
**76137 Karlsruhe (DE)**

(54) **Verfahren und Vorrichtung zur Spurhalteassistenz-Regelung**

(57) Die Erfindung betrifft ein Spurhalteassistenz-Verfahren für ein Fahrzeug (1), das auf einer Fahrspur (2) fährt,
bei dem überprüft wird, ob ein Aktivierungskriterium für einen selbsttätigen Fahrdynamikeingriff erfüllt ist und bei Erfüllen eines Aktivierungskriteriums Steuersignale für den Fahrdynamikeingriff ausgegeben werden.
Hierbei ist vorgesehen, dass
als Aktivierungskriterium eine verbleibende Fahrzeit zum Kreuzen oder Erreichen einer seitlichen Fahrspurlinie (4, 5) ermittelt und mit einem Schwellwert ($T_s$) verglichen wird, und
während des selbsttätigen Fahrdynamikeingriffs ein Deaktivierungskriterium zur Beendigung des selbsttätigen Fahrdynamikeingriffs überprüft wird, wobei das Deaktivierungskriterium einen Vergleich einer Fahrzeug-Ausrichtung ($R_v$, $R_L$) mit einer Fahrspur-Richtung ($R_s$) aufweist.

**Fig. 1**

EP 2 583 875 A2

**Beschreibung**

Stand der Technik

Spurhalteassistenz-Systeme mit selbsttätigem Eingriff in die Fahrzeugdynamik bzw. selbsttätiger Spurkorrektur werden auch als eingreifende Spurhalteassistenz-Systeme, LDP (lane departure prevention), LKS (lane keeping system) oder LKAS (lane keeping assistant system) bezeichnet.

Die Spurhalteassistenz-Systeme detektieren das Fahrzeugumfeld mittels einer Umfeldsensorik und greifen in die Fahrzeugdynamik ein, um ein Verlassen der Fahrspur des Fahrzeugs zu verhindern. Hierbei können unterschiedliche Aktoren des Fahrzeugs angesteuert werden, insbesondere die Fahrzeuglenkung und/oder Bremsen. Selbsttätige Eingriffe in die Fahrzeug-Lenkung sind insbesondere bei einer elektromechanischen Lenkung (EPS, electric power steering), einer Aktivlenkung (AFS, active front steering) oder RWS (rear wheel steering), möglich. Bremseingriffe können insbesondere durch einseitige Bremseingriffe oder asymmetrische Bremseingriffe erfolgen. Durch die Eingriffe in die Fahrzeug-Aktorik wird ein Giermoment um die Fahrzeughochachse aufgeprägt, welches das Fahrzeug zu einer Gierbewegung veranlasst, um das Verlassen der Spur zu verhindern.

Hierbei sind LKS-Systeme bekannt, die auf einer kontinuierlichen Stellgröße, insbesondere dem Lenkmoment beruhen und über die gesamte Fahrbahnbreite aktiv sind. Derartige Regelungen können als unangenehm empfunden werden, da die Stellgröße kontinuierlich und unabhängig von der Fahrerintention eingreift. Andere Fahrerassistenzsysteme zielen darauf ab, den Eingriff abhängig vom Überschreiten einer Regelschwelle vorzunehmen. Nachteilig an derartigen Systemen ist jedoch, dass die Regelschwelle typischerweise unabhängig von der Position des Fahrzeugs zur Fahrbahnbegrenzung wirkt und damit bei breiten Fahrbahnen oftmals zu früh greift.

Die DE 10 2008 040 627 A1 beschreibt eine Vorrichtung und ein Verfahren zum Betrieb eines Lenkassistenzsystems mit Adaption bei Umfeldobjektannäherung. Hierbei wird ein eingriffsfreier Bereich am Rand der eigenen Fahrspur definiert, außerhalb von dem keine Fahrdynamikeingriffe des Spurhalteassistenzsystems erfolgen.

Offenbarung der Erfindung

Erfindungsgemäß werden ein Verfahren und eine Vorrichtung zur Spurhalteassistenzregelung geschaffen, die einen selbsttätigen Eingriff in die Fahrdynamik beginnen, wenn eine verbleibende Fahrzeit bis zum Kreuzen der begrenzenden Fahrspur-Linie unterschritten wird. Dies kann somit ein Aktivierungskriterium für den Regeleingriff bzw. Eingriff in die Fahrdynamik darstellen.

Somit wird vorteilhafterweise ein inneres Band der Fahrspur des Fahrzeugs geschaffen, in dem keine Fahrdynamikeingriffe der Spurhalteassistenzregelung eingeleitet werden.

Ein Deaktivierungskriterium zur Beendigung des selbsttätigen Fahrdynamikeingriffs zielt darauf ab, eine Fahrzeug-Ausrichtung mit der Fahrspur-Richtung zu vergleichen.

Die Fahrzeug-Ausrichtung kann hierbei z. B. durch die Fahrtrichtung, d. h. die Richtungsangabe des Geschwindigkeitsvektors des Fahrzeugs, oder durch die Längsachse des Fahrzeugs festgelegt sein. Die Fahrspurrichtung ergibt sich als aktuelle Richtung der Fahrspur und kann z. B. durch eine Tangente an eine Mittellinie der Fahrspur oder eine begrenzende Fahrspurlinie festgelegt werden.

In das Deaktivierungskriterium kann ergänzend zu dem Vergleich der Richtungen auch einen Minimalabstand zu den Fahrspurlinien enthalten sein, um nicht eine zu schnelle nachfolgende Aktivierung zuzulassen. Somit kann das Deaktivierungskriterium durch zwei oder mehr Teilkriterien gebildet werden

Der Vergleich der Richtungen kann zum einen dahingehend erfolgen, dass bei Parallelität der Fahrzeug-Ausrichtung mit der Fahrspurrichtung das Deaktivierungskriterium erfüllt ist. Weiterhin kann das Deaktivierungskriterium auch erst bei Überschreiten der Parallelität erreicht wird, d. h. wenn der Schnittwinkel zwischen der Fahrzeugrichtung und der Fahrspurrichtung sein Vorzeichen ändert.

Erfindungsgemäß werden einige Vorteile erreicht:

Indem die selbsttätige Fahrzeugregelung nur in einem äußeren Randbereich der Fahrspur eingeleitet wird, ist vorteilhafterweise ein innerer Bereich hierdurch nicht betroffen, so dass in diesem keine den Fahrer störende Gängelung bzw. keine unerwünschten Fahrdynamikeingriffe auftreten. So kann der Fahrer z. B. ungestört in dem inneren Bereich der Fahrspur etwas nach links fahren, um für einen nachfolgenden Überholvorgang an einem größeren vorausfahrenden Fahrzeug vorbei die angrenzende Gegenfahrspur besser einsehen zu können, oder in einer etwas weiter rechts gelegenen Position besser auf Verkehrs- und Hinweisschilder achten zu können.

Hierzu ist die Überprüfung der verbleibenden Fahrzeit vorteilhaft gegenüber z. B. einem reinen Vergleich mit einem Schwellwert für den Querabstand zur seitlich begrenzenden Fahrspur-Linie, da sie z. B. eine Annäherung unter kleinem Winkel bis nahe an die Fahrspur-Linie zulässt, ohne bereits eine Aktivierung einzuleiten, wenn der Fahrer bewusst den vorausliegenden Verkehrsraum einsehen will.

Indem die Deaktivierung des selbsttätigen Fahrzeugeingriffs nicht auf einen Querabstand bzw. das Verlassen eines seitlichen Randbereichs gerichtet ist, sondern auf eine hinreichende Gierbewegung des Fahrzeugs zumindest parallel zur Fahrspurrichtung, kann vermieden werden, dass in dem Randbereich fortlaufend selbsttätige Fahrdynamik-Regeleingriffe durchgeführt und nach Beendigung bald wieder vorgenommen werden.

Indem das Deaktivierungskriterium vorteilhafterweise verlangt, dass der Schnittwinkel der Richtungen einen Vorzeichenwechsel ausführt und somit das Fahrzeug über die Parallelität hinaus in die Gegenrichtung giert bzw. schwenkt, können derartige fortlaufend wiedereinsetzenden Regelungen besonders gut unterdrückt werden.

Dem liegt auch die Erkenntnis zu Grunde, dass insbesondere auch in Kurvensituationen ein derartiges Übergieren eher vorteilhaft ist. In einer einfachen Kurve wird ein Unterschreiten des Minimalabstandes eher an der kurvenäußeren Fahrspurlinie auftreten, in einer Linkskurve somit an der rechten Fahrspurlinie. Ein Fahrdynamikeingriff dahingehend, dass die Ausrichtung des Fahrzeugs stärker in die Kurve hinein erfolgt, hilft hierbei, das Fahrzeug nachfolgend weiter von der äußeren Fahrspurlinie weg zu führen.

Eine nicht eingezeichnete mittlere Fahrspur-Linie, die nicht in der Fahrbahn eingezeichnet ist, kann erfindungsgemäß aus Kamerasignalen und gegebenenfalls Navigationssignalen ermittelt werden. Hierbei kann dieser Fall erkannt werden, wenn ein aus Kamerasignalen ermittelter Querabstand zwischen Fahrspurlinien als zu groß erkannt wird und/oder aus Karten- und Navigationssignalen ermittelt wird, dass eine mehrspurige Fahrbahn vorliegt.

Kurze Beschreibung der Zeichnungen

Fig. 1    zeigt eine Fahrsituation eines Fahrzeugs auf einer Fahrbahn bei Durchführung eines Verfahrens gemäß einer Ausführungsform der Erfindung;

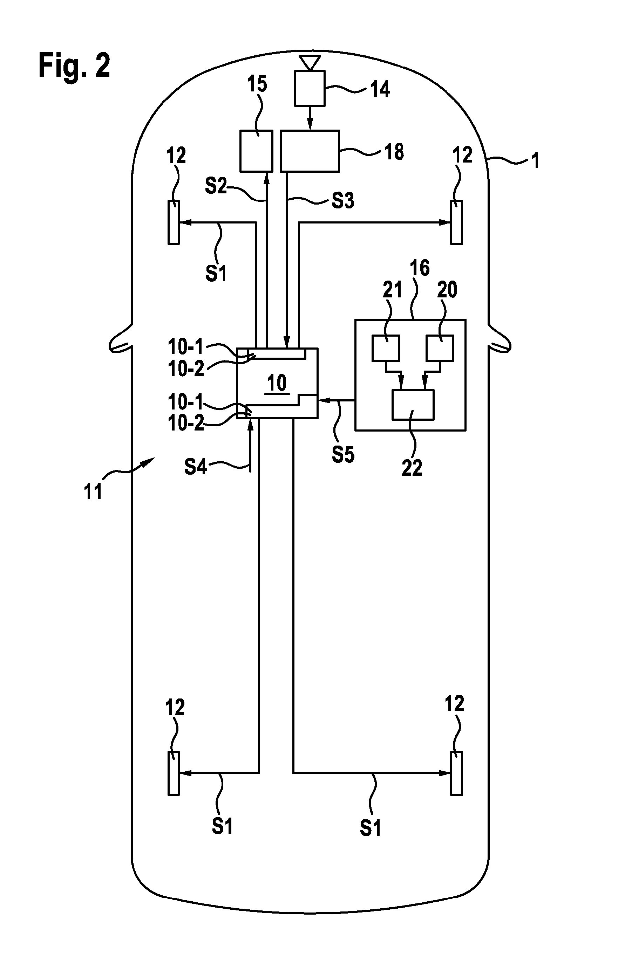

Fig. 2    zeigt das Fahrzeug aus Figur 1 in vergrößerter Darstellung;

Fig. 3    ein Diagramm des zeitlichen Verlaufs der jeweils aktuellen verbleibenden Fahrzeit;

Fig. 4    ein Flussdiagramm eines erfindungsgemäßen Verfahrens.

Beschreibung der Ausführungsformen

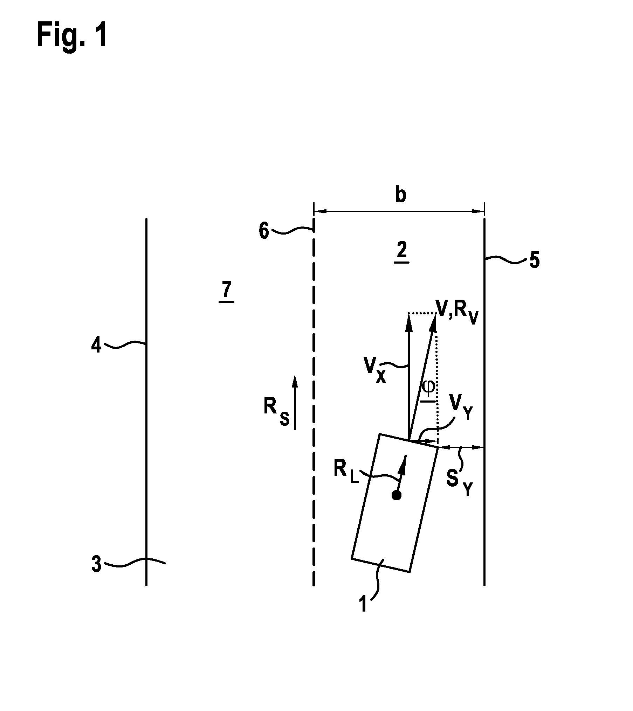

Ein Fahrzeug 1 fährt gemäß Figur 1 in einer rechten Fahrspur 2 einer Fahrbahn 3. Die Fahrbahn 3 kann wie gezeigt die rechte Fahrspur 2 und eine linke Fahrspur 3 aufweisen und ist seitlich durch Fahrspur-Linien 4 und 5 abgegrenzt; eine mittlere Fahrspur-Linie 6 trennt die beiden Fahrspuren 2 und 7.

Die Spur-Richtung Rs der Fahrspur 2 ergibt sich als Tangente an den begrenzenden Fahrspur-Linien oder als Mittelwert von diesen.

Das Fahrzeug 2 fährt mit einer Fahrgeschwindigkeit v, deren Richtung Rv gemäß Figur 1 im Allgemeinen von der Spur-Richtung Rx abweichen kann. Weiterhin kann die Richtung RL der Längsachse des Fahrzeugs 2 von Rv und Rx abweichen.

Gemäß Figur 1 beziehen sich die Indizes x und y auf die Fahrspur 2; die x-Richtung entspricht der Spur-Richtung Rs, die Querrichtung y verläuft senkrecht zu x.

Für die Zusammensetzung der Geschwindigkeit v gilt:

$$v^2 = v_x^2 + v_y^2 \quad,$$

wobei $v_x$ die Längskomponente der Geschwindigkeit zur Spurrichtung R und $v_y$ die Quergeschwindigkeit darstellt. Das Fahrzeug 1 fährt unter einem Schnittwinkel φ zur Spurrichtung Rs. Somit ergibt sich vx = v • sin φ und vy = v • cos φ.

Die Spurhalteassistenz-Regelung umfasst ein Aktivierungskriterium (Auslösekriterium) K1 und ein Deaktivierungskriterium K2 für einen selbsttätigen Fahrdynamikeingriff.

Das Fahrzeug 1 weist ein Spurhalte-Assistenzsystem 11 mit einer Steuereinrichtung 10 auf, wobei das Spurhalte-Assistenzsystem 11 auch z. B. in einer Fahrdynamikregelung integriert sein kann.

Der Fahrdynamik-Eingriff am Fahrzeug kann einen selbsttätigen Lenkeingriff bei z. B. einer elektromechanischen Lenkung oder elektrischen Lenkung (EPS, electric power steering), und/oder durch einen selbsttätigen Bremseingriff, insbesondere einen einseitigen Bremseingriff oder asymmetrischen Bremseingriff umfassen. Zur Durchführung eines Fahrdynamik-Eingriffs steuert die Steuereinrichtung 10 entsprechend über Fahrdynamik- Steuersignale S1, S2 direkt oder indirekt Radbremsen 12 und/oder eine Lenk- Eingriffseinrichtung 15 an, die z. B. Teil einer elektrischen oder elektromechanischen Lenkung ist. Ergänzend kann während

Das zeitliche Aktivierungskriterium K1 der Spurhalteassistenz -Regelung wird durch eine verbleibende Fahrzeit (time to line crossing, TLC) τ bis zur Überschreitung einer Fahrspur-Linie 4, 5 bestimmt, gemäß Figur 1 somit der rechten Fahrspurlinie 5.

Die Zeit τ bis zum Überschreiten der Fahrspur-Linie 5 ergibt sich somit zu:

$$\tau = \frac{s_y}{v_y}$$

wobei $s_y$ z. B. als Querabstand der äußeren physikalischen Begrenzung des Fahrzeugs 1 zur Fahrspur-Linie 5 definiert ist.

Als Auslösekriterium K1 wird nun die verbleibende Fahrzeit $\tau$ mit einem unteren Schwellwert Ts verglichen. Es gilt somit

$$\tau \leq T_s \, ,$$

d. h. die verbleibende Fahrzeit (time to line crossing) $\tau$ erreicht oder unterschreitet den unteren Schwellwert Ts.

Hierzu wird der untere Schwellwert Ts so gewählt, dass er sich gerade unterhalb der menschlichen Reaktionszeit (Schrecksekunde) $T_{Reak}$ befindet, aber noch oberhalb der technischen Realisierungszeit $T_{Real}$

$$T_{Reak} > T_S > T_{Real} \, ,$$

Am Beispiel der Funktionsausprägung über die Radbremsen 12 ist dies somit die Druckaufbauzeit plus der benötigen Zeit zum Gieren bzw. Richtungsändern.

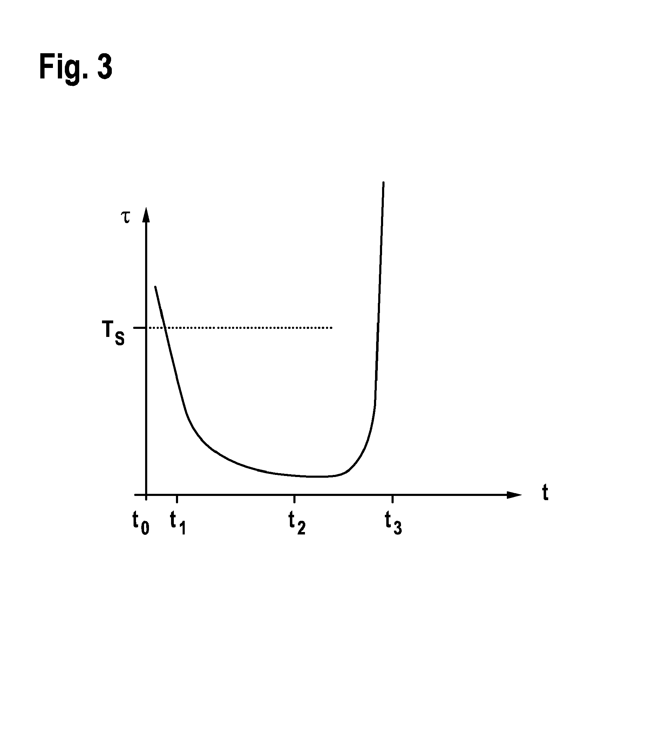

Figur 3 zeigt beispielhaft eine Fahrszene:

Zum Zeitpunkt t0 hat das Fahrzeug 1 noch hinreichenden Abstand zur rechten Fahrspurlinie 5, zum Zeitpunkt t1 unterschreitet die TLC den Schwellwert $T_s$, so dass nachfolgend der Fahrdynamik-Eingriff beginnt.

Somit nähert sich das Fahrzeug 1 ab dem Zeitpunkt t1 zwar zunächst noch weiter der Fahrspurlinie 5, jedoch gemäß Figur 3 mit abnehmender Steigung, so dass es sich nachfolgend nach Erreichen eines Minimums bei t2 wieder von der Fahrspurlinie 5 entfernt.

Zur Deaktivierung des Fahrdynamik-Eingriffs ist ein Deaktivierungskriterium K2 vorgesehen. Dieses Deaktivierungskriterium K2 enthält eine Überprüfung, die gemäß den Alternativen K2a oder K2b ausgebildet sein kann:

K2a: Ist die Fahrtrichtung Rv (Vektor von v) und/oder die Fahrzeugrichtung $R_L$ (Richtung der Längsachse) wieder parallel zur Spurrichtung Rs, ?

K2b: Ist diese Parallelität zwischen einerseits der Fahrtrichtung Rv (Vektor von v) und/oder der Fahrzeugrichtung $R_L$ (Richtung der Längsachse) und andererseits der Spurrichtung Rs bereits überschritten?

K2 kann somit gemäß der Variante K2a auf reine Parallelität von Rv und Rs ausgerichtet sein.

Bei Parallelität der Fahrtrichtung Rv mit der Spurrichtung R somit wird dann die verbleibende Fahrzeit

$\tau$ unendlich, wie in Zeitpunkt t3 in dem Diagramm der Figur 3. Der Schnittwinkel $\varphi$ wird Null.

Wenn gemäß der Variante K2b ein Überschreiten der Parallelität überprüft wird, wird somit überprüft, ob der Schnittwinkel $\varphi$ sein Vorzeichen ändert.

Ergänzend kann in das Deaktivierungskriterium auch eine Bewertung des Querabstandes $S_y$ einbezogen werden, so dass $S_y$ z. B. größer 0,2 • b ist, wobei b die Fahrspurbreite der Fahrspur 2 ist. Somit müssen dann zwei Teilkriterien erfüllt sein.

Vorteilhafterweise wird der Verlauf der Fahrspur 2 vor dem Fahrzeug 1 berücksichtigt, um einen nicht-geraden Verlauf zur Ermittlung der verbleibenden Fahrzeit (TLC) $\tau$ zu berücksichtigen. Der Fahrspurverlauf kann z. B. über ein Kamerasystem 14, 18 überwacht werden, z. B. ein Stereo-Kamerasystem im Frontbereich des Fahrzeugs mit einer Stereokamera 14 und deren Steuereinrichtung 18, die Bildsignale S3 an die Steuereinrichtung 10 ausgibt. Ergänzend oder alternativ können Kartendaten über den Verlauf der Fahrspur 2 bzw. der gesamten Fahrbahn 3 herangezogen werden, die von einem Navigationssystem 16 zur Verfügung gestellt werden, das in bekannter Weise einen GPS-Empfänger 20 zum Empfangen von GPS-Signalen und einen Kartenspeicher 21 sowie eine Steuereinrichtung 22 aufweist, die ein map-Matching durchführt. Somit kann ein map-Matching bzw. eine Positionsbestimmung in den Kartendaten erfolgen.

Verfahren zur Ermittlung der verbleibenden Fahrzeit $\tau$ bzw. Time to Line Crossing aufgrund von Kartendaten bei z. B. gekrümmter Fahrspur 2 sind als solche bekannt.

Grundsätzlich kann z. B. die mittlere Fahrspur-Linie 6 nicht eingezeichnet sein, z. B. bei einer Landstraße, oder auch bei Bauarbeiten an mehrspurigen Schnellstraßen. Dieser Fall kann erkannt werden, wenn ein aus Kamerasignalen ermittelter Querabstand, hier somit z. B. 2 • b, zwischen den Fahrspurlinien 4 und 5 als zu groß erkannt wird und/oder aus Karten- und Navigationssignalen ermittelt wird, dass eine mehrspurige Fahrbahn 3 vorliegt. In diesem Fall kann die mittlere Fahrspur-Linie 6 ermittelt werden, indem beide seitlichen Fahrspur-Linien 4, 5 von der Stereokamera 14 erfasst werden und hieraus direkt oder unter Hinzuziehung der Navigationsdaten die Position der mittleren Fahrspur 6 ermittelt wird.

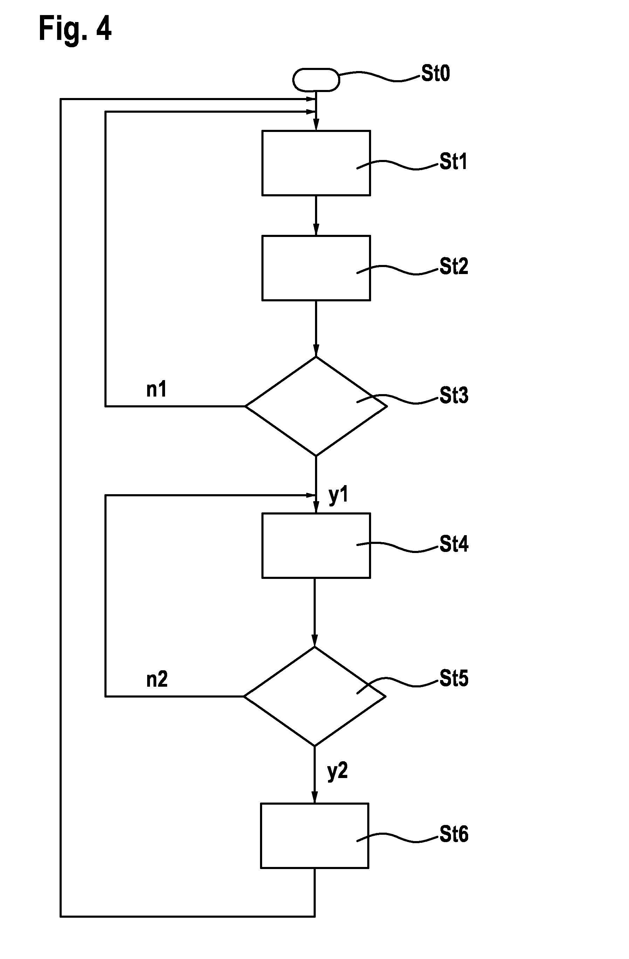

Das erfindungsgemäße Verfahren startet somit gemäß Figur 4 in Schritt St0, d. h. bei Starten der Fahrdynamikregelung bzw. Anlassen des Motors, oder auch erst während der Fahrt, d. h. v > 0. Nachfolgend werden gemäß Schritt St1 fortlaufend Fahrdynamik-Daten über den CAN-Bus des Fahrzeugs 1 aufgenommen, und gemäß Schritt St2 die verbleibende Fahrzeit (TLC) $\tau$ bis zum Kreuzen bzw. Erreichen einer der Fahrspurlinien 4, 5 ermittelt. Wenn im Entscheidungsschritt St3 das Aktivierungskriterium K1 nicht erfüllt ist, wird gemäß Verzweigung n das Verfahren wiederum vor den Schritt St1 zurückgesetzt und somit fortlaufend die Schleife aus St1 und St2 durchlaufen.

Falls das Aktivierungskriterium K1 erfüllt ist, d. h. $\tau \leq T_s$ erfüllt ist, wird gemäß Verzweigung y1 nachfolgend in Schritt St4 die Fahrdynamik-Regelung mit aktivem Fahrdynamik-Eingriff durch z. B. Ausgabe der Fahrdynamik- Steuersignale S1, S2 für einen Bremseingriff oder Lenkeingriff gestartet und fortlaufend gemäß Schritt St5 überprüft, ob das Deaktivierungskriterium K2 erfüllt ist. Solange K2 nicht erfüllt ist, wird gemäß Verzweigung n2 in einer Schleife fortlaufend der Schritt St4 durchgeführt, bis gemäß der Verzweigung y2 das Deaktivierungskriterium K2 erfüllt ist und somit in Schritt St6 der Fahrdynamikeingriff beendet wird und das Verfahren vor den Schritt St1 zurückgesetzt wird.

Die Steuereinrichtung 10 der erfindungsgemäßen Spurhalter-Assistenzregelung weist Schnittstellen 10-1 zur Aufnahme von Kamerasignalen S3, Fahrdynamik-signalen S4 und Navigationssignalen S5 sowie eine Schnittstelle 10-2 zur Ausgabe der Brems-Steuersignale S1 und gegebenenfalls Lenksteuersignale S2 auf. Die Schnittstellen 10-1 und 10-2 können z. B. durch den CAN-Bus gebildet werden.

**Patentansprüche**

1. Spurhalteassistenz-Verfahren für ein Fahrzeug (1), das auf einer Fahrspur (2) fährt, wobei überprüft wird, ob ein Aktivierungskriterium für einen selbsttätigen Fahrdynamikeingriff erfüllt ist und bei Erfüllen des Aktivierungskriteriums Steuersignale (S1, S2) für den Fahrdynamikeingriff ausgegeben werden, **dadurch gekennzeichnet, dass** als Aktivierungskriterium eine verbleibende Fahrzeit () zum Kreuzen oder Erreichen einer seitlichen Fahrspurlinie (4, 5) ermittelt und mit einem Schwellwert ($T_s$) verglichen wird, und während des selbsttätigen Fahrdynamikeingriffs ein Deaktivierungskriterium (K2) zur Beendigung des selbsttätigen Fahrdynamikeingriffs überprüft wird, wobei das Deaktivierungskriterium (K2) einen Vergleich einer Fahrzeug-Ausrichtung (Rv, RL) mit einer Fahrspur-Richtung (Rs) enthält.

2. Verfahren nach Anspruch 1, **dadurch gekennzeichnet, dass** das Deaktivierungskriterium (K2) die Ermittlung beinhaltet, ob eine Parallelität der Fahrzeug-Ausrichtung (Rv, RL) und der Fahrspur-Richtung (Rs) erreicht oder überschritten ist.

3. Verfahren nach Anspruch 1 oder 2, **dadurch gekennzeichnet, dass** ein Schnittwinkel ($\varphi$) zwischen der Fahrzeug-Ausrichtung (Rl, Rv) und der Fahrspur-Richtung (Rs) ermittelt wird und das Deaktivierungskriterium (K2) die Überprüfung beinhaltet, ob ein Vorzeichenwechsel des Schnittwinkels ($\varphi$) auftritt.

4. Verfahren nach Anspruch 2 oder 3, **dadurch gekennzeichnet, dass** das Deaktivierungskriterium (K2) ausschließlich durch den Vergleich der Fahrzeug-Ausrichtung (Rv, RL) mit der Fahrspur-Richtung (Rs) gebildet wird.

5. Verfahren nach einem der Ansprüche 1 bis 3, **dadurch gekennzeichnet, dass** das Deaktivierungskriterium (K2) weitere Teilkriterien umfasst.

6. Verfahren nach Anspruch 5, **dadurch gekennzeichnet, dass** als weiteres Teilkriterium vorgesehen ist eine Ermittlung, ob ein Querabstand (Sy) zu einer Fahrspurlinie (4, 5) einen Minimalabstand überschreitet.

7. Verfahren nach einem der vorherigen Ansprüche, **dadurch gekennzeichnet, dass** ermittelt wird, ob eine Fahrspur-Linie (6) nicht erfasst wird, und in diesem Fall aus Kamerasignalen die Position der nicht erfassten Fahrspur-Linie (6) ermittelt wird.

8. Steuereinrichtung (10) zur Spurhalteassistenz-Regelung, insbesondere zur Durchführung eines Verfahrens nach einem der vorherigen Ansprüche, wobei die Steuereinrichtung (10) Schnittstellen (10-1, 10-2) zur Aufnahme von Fahrdynamik-Signalen (S2) und zur Ausgabe von Steuersignalen (S1, S2) zur Veränderung der Fahrdynamik des Fahrzeugs (1) aufweist, wobei die Steuereinrichtung überprüft, ob ein Aktivierungskriterium (K1) für einen selbsttätigen Fahrdynamikeingriff erfüllt ist und bei Erfüllen des Aktivierungskriteriums (K1) Steuersignale (S1, S2) für den Fahrdynamikeingriff ausgegeben werden, **dadurch gekennzeichnet, dass** die Steuereinrichtung (10) als Aktivierungskriterium eine verbleibende Fahrzeit () zum Kreuzen oder Erreichen einer seitlichen Fahrspurlinie (4, 5) ermittelt und mit einem Schwellwert ($T_s$) vergleicht und während des Fahrdynamikeingriffs ein Deaktivierungskriterium (K2) zur Beendigung des selbsttätigen Fahrdynamikeingriffs überprüft, wobei das Deaktivierungskriterium (K2) einen Vergleich einer Fahrzeug-Ausrichtung (Rv, RL) mit einer Fahrspur-Richtung (Rs) aufweist.

# Fig. 1

# Fig. 2

# Fig. 3

# Fig. 4

St0

St1

St2

n1

St3

y1

St4

n2

St5

y2

St6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008040627 A1